# EUROPÄISCHE PATENTSCHRIFT

(11) **EP 3 915 820 B1**
(45) Veröffentlichungstag und Bekanntmachung des Hinweises auf die Patenterteilung: **09.04.2025**
(21) Anmeldenummer: 21175910.5
(22) Anmeldetag: 26.05.2021
(51) Int. Cl.: B60K 15/03, F17C 9/04, F02M 21/06, F02M 21/02

(54) **SYSTEM ZUM BEREITSTELLEN EINES GASFÖRMIGEN KRAFTSTOFFS**
SYSTEM FOR PROVIDING A GASEOUS FUEL
SYSTÈME DE FOURNITURE D'UN COMBUSTIBLE GAZEUX

(30) Priorität: 28.05.2020 CH 6382020
(43) Veröffentlichungstag der Anmeldung: 01.12.2021
(73) Patentinhaber: Liebherr Machines Bulle SA, 1630 Bulle (CH)
(72) Erfinder: Bouzid, Seba, 1632 Broc (CH); Weiss, Ulrich, 1752 Villars-sur-Glâne (CH)
(74) Vertreter: Laufhütte, Dieter

(56) Entgegenhaltungen:
- WO-A1-2018/166603
- DE-A1- 102018 214 903
- DE-A1- 102018 216 175
- JP-A- 2017 036 709
- US-A1- 2016 273 491

## Beschreibung

Die vorliegende Erfindung betrifft ein System zum Bereitstellen eines gasförmigen Kraftstoffs, insbesondere ein Kraftstoffeinspritzsystem, sowie eine Verbrennungskraftmaschine und ein Fahrzeug, das ein solches System nutzt.

Aufgrund legislativer Änderungen in der Besteuerung von Kraftstoffen und/oder der Abgasgesetzgebung wird der Einsatz von gasförmigen Kraftstoffen selbst für Fern-LKWs und/oder für mobile Arbeitsmaschinen zur Realität werden. Aber auch bei maritimen Anwendungen oder bei offshore-Anlagen könnte es aus unterschiedlichen Gründen heraus vorteilhaft sein, gasförmige Kraftstoffe zu verwenden. Unter den gasförmigen Kraftstoffen bietet beispielsweise Wasserstoff die Option einer nahezu klimaneutralen "Well-to-Tank Bereitstellung". Darüber hinaus kann Wasserstoff auch in mobilen Brennstoffzellenantrieben und somit in tatsächlich emissionsfreien (Zero Emission) Fahrzeugen eingesetzt werden. Wasserstoffverbrennungsmotoren bieten das Potenzial selbst strenge Abgasgrenzwerte allein durch innermotorische Maßnahmen einhalten zu können, weswegen zumindest das Abgasnachbehandlungssystem erheblich reduziert werden kann.

Sofern die mobile Anwendung wie bspw. der Einsatz in einem Fern-LKW oder einer mobilen Arbeitsmaschine eine vergleichsweise lange Nutzungsdauer zwischen den Nachtankvorgängen erfordert, bietet sich insbesondere die Verwendung von in flüssiger Form gespeichertem Wasserstoff an. Auch unter der Beachtung, dass zur Speicherung von Flüssigwasserstoff ein Tieftemperatur-Flüssiggasspeicher benötigt wird, hat dieser unter Mitberücksichtigung seiner Außenabmasse eine höhere volumetrische Energiedichte als gasförmiger Wasserstoff in einem 700 bar Drucktank. Die gravimetrische Energiedichte von Wasserstoff-Adsorptionspeichern ist zu gering und steht daher auch nicht im Fokus zukünftiger Onroad oder Offroad-Anwendungen. Kryogenspeicher für Wasserstoff sind extrem aufwendig, da sie neben den thermischen Anforderungen auch sehr hohe Anforderung in Bezug auf die Druckfestigkeit aufweisen müssen. Auch bei mobilen Systemen ist eine Speicherung von chemisch gebundenem Wasserstoff bekannt. Damit der Wasserstoff dem Energiewandler zugeführt werden kann, muss dieser dann durch eine im Fahrzeug ablaufende chemische Reaktion abgeschieden werden.

Bei einer Flüssiggasspeicherung von Gasen, die eine besonders tiefe Siedetemperatur aufweisen wie bspw. Wasserstoff (-252° C bei 1 bar), Methan (-162° C bei 1 bar) - dem Hauptbestandteil von Erdgas - übt die permanent erfolgende Teilverdunstung, der sogenannte Boil-Off sehr großen Einfluss auf die Handhabung aus. Das betrifft unter anderem die Notwendigkeit einer sehr wirkungsvollen und damit aufwendigen thermischen Isolierung. Dennoch ist ein Wärmeeintrag aus der Umgebung letztlich unvermeidbar, z.B. über die aus dem Speicher führende Entnahmeleitung. Werden aus einem solchen treffenderweise als Tieftemperatur-Flüssiggasspeicher bezeichneten Speicher vergleichsweise hohe Brenngasmengen entnommen, steht dem während der Entnahme innerhalb des Tieftemperatur-Flüssiggasspeichers verdunstenden Brenngasanteils, d.h. dem Boil-Off Gas ein zunehmend grösser werdendes Volumen zur Verfügung. Erfolgt hingegen keine oder nur eine sehr geringe Brenngasentnahme, erfolgt ein Druckanstieg innerhalb des Tieftemperatur-Flüssiggasspeichers. Nach dem Erreichen eines bestimmten Druckniveaus, welches bspw. für Wasserstoff-Flüssiggasspeicher in einer Größenordnung von 10 bar liegt, muss die Menge des darüber hinausreichenden Boil-Off Wasserstoffs resp. Boil-Off Gases abgelassen werden. Dieses aus der Sicht der Kosten- und Energieeffizienz unerwünschte Ablassen führt entweder zu einem Totalverlust dieses Boil-Off Gasanteils oder erfordert eine Alternativnutzung mit dem dafür benötigten apparativen Aufwand.

Damit ein (vollständiges) Nachtanken eines Tieftemperatur-Flüssiggastanks überhaupt möglich ist, muss zunächst das darin verbliebene Boil-Off Gas abgesaugt werden. Um dieses erneut dem vorgesehenen Nutzungspfad resp. Kraftstoff- bzw. Brenngaspfad zuführen zu können, muss dieses entnommene Boil-Off Gas entsprechend abgekühlt werden und somit erneut Prozessenergie zugeführt werden. Ferner erfordert diese Vorgehensweise einen apparativen Aufwand an der Betankungseinrichtung. Der apparative Aufwand eine solche Anlage in einem Fahrzeug mitzuführen, ist nicht praktikabel. Darüber hinaus würden auch die Abmessungen einer solchen Anlage in einem Fahrzeug den zur Verfügung stehenden Nutzraum ungebührlich stark einschränken.

Weiter nachteilhaft an bisher bekannten Umsetzungen von mit einem Common-Rail-System ausgestatteten Wasserstoffmotoren ist, dass ein sofortiges Abschalten unterbleiben sollte/muss, weil ansonsten der Wasserstoff innerhalb des Rails und den damit verbundenen Leitungen etc. unter Hochdruck stehend verbleiben würde. Üblicherweise wird ein solcher Wasserstoffmotor unter Ausbleiben einer weiteren Wasserstoff-Zuführung in das Rail solange weiter betrieben, bis ein Druckabbau im Rail abgeschlossen ist. Sofern die während eines solchen Nachlaufs anfallende mechanische Abgabeleistung des Wasserstoffmotors nicht verwertet werden kann, z.B. zum Laden einer Batterie, wird diese z.B. durch einen Leerlaufbetrieb des Wasserstoffmotors oder anderweitig abgebaut. Demzufolge liegt ein weiterer Energieverlust vor.

Zusammenfassend gilt demnach, dass in Anwendungen, bei denen das Brenngas unter einem hohen Druck zugeführt werden muss und dieses Brenngas aus einem Tieftemperatur-Flüssiggasspeicher bezogen wird, Brenngasmengen anfallen, die nicht mehr dem eigentlich vorgesehenen Nutzungspfad zugeführt werden können. Dies sind, u.a. ein Anteil des Boil-Off Gases, welches ggf. aufgrund der begrenzten Druckfestigkeit eines Tieftemperatur Flüssiggasspeichers nicht mehr darin gehalten werden kann und abgelassen werden muss, sowie das darin verbleibende Boil-Off Gas, welches zwar im Tieftemperatur-Flüssiggasspeicher gehalten werden kann, jedoch vor dem Nachtanken abgesaugt werden muss, um ausreichend Volumen für das in Flüssigform zu tankende Brenngas zu schaffen.

Die Erfindung betrifft ein System zum Bereitstellen eines gasförmigen Kraftstoffs, insbesondere ein Kraftstoffeinspritzsystem, welches in einem Tieftemperaturtank, insbesondere einem Tieftemperatur-Flüssiggasspeicher gespeichert ist, um für eine Injektionsvorrichtung eines Kraftstoffeinspritzsystems, insbesondere für eine Kraftstoff-Hochdruckeinspritzung Kraftstoff bereitzustellen, mit dem zumindest der Verlust von Boil-Off Gas deutlich reduziert werden kann. In einer besonders vorteilhaften Ausführungsform der Erfindung kann zumindest ein bedeutender Teil des Boil-Off Gases sogar dem eigentlich vorgesehenen Nutzungspfad zugeführt werden.

Die Umsetzung der Erfindung ist insbesondere bei der Speicherung von Gasen wirtschaftlich sinnvoll, die einen tiefen Siedepunkt aufweisen. (Insbesondere ist die Erfindung bei der Speicherung von Wasserstoff wirtschaftlich sehr sinnvoll, da sein Siedepunkt mit -252° C (bei 1 bar) extrem niedrig ist. Auch eine Anwendung für verflüssigtes Erdgas (LNG = Liquified Natural Gas) erscheint wirtschaftlich sinnvoll, da Erdgas ebenfalls einen tiefen Siedepunkt aufweist, der sich etwas unterhalb von -160° C (bei 1 bar) befindet.).

Die oben aufgeführten Probleme werden durch ein System überwunden oder zumindest abgemildert, das die Merkmale des unabhängigen Anspruchs 1 aufweist. Weiter vorteilhafte Ausgestaltungen sind dabei in den abhängigen Ansprüchen dargelegt.

Die US 2016/273491 A1 zeigt ein Kraftstoffsystem für einen Motor, das sämtliche Merkmale aus dem Oberbegriff des Anspruchs 1 offenbart.

Die WO 2018/166603 A1 zeigt ein Kraftstoffsystem für eine Brennkraftmaschine bei der das Rail mit einem Gaszwischenspeicher verbunden ist, um im Rail nicht mehr benötigtes Gas zurückzuführen.

Die Erfindung betrifft ein System zum Bereitstellen eines gasförmigen Kraftstoffs, insbesondere ein Kraftstoffeinspritzsystem, das einen Tieftemperaturtank, insbesondere einen Tieftemperatur-Flüssiggasspeicher zum Aufnehmen des Kraftstoffs in seinem durch Abkühlen erreichten flüssigen Aggregatszustand, und ein Rail umfasst, das mit mindestens einer Injektorvorrichtung zum Abgeben von Brenngas in jeweils einen Brennraum ausgestattet ist. Das System istweist einen zum Aufnehmen von gasförmigem Kraftstoff, ausgebildeten Druckspeicher auf, der sowohl mit dem vorzugsweise als Tieftemperatur-Flüssiggasspeicher ausgeführten Tieftemperaturtank als auch dem Rail fluidisch verbunden ist, um aus dem Tieftemperaturtank stammenden gasförmigen Kraftstoff resp. daraus stammendes Brenngas zwischenzuspeichern und diesen dem Rail zuzuführen.

Da gemäss dem heutigen Stand der Technik in der Tieftemperaturspeicherung von Gasen die Erfindung besonders vorteilhaft für Tieftemperatur-Flüssiggasspeicher eingesetzt werden kann, was im Folgetext erklärt wird, wird nachfolgend der Begriff Tieftemperatur-Flüssiggasspeicher verwendet. Hieraus darf nicht geschlossen werden, dass sich erfindungsgemässe Systeme auf solche beschränken, die einen Tieftemperaturtank beinhalten, welche der Gattung Tieftemperatur-Flüssiggasspeicher zugeordnet werden können.

Dem Fachmann ist klar, dass jedwede kanalartige Leitung ein Rail darstellen kann. Zudem muss von dem Rail nur eine Injektorvorrichtung abgehen und es ist nicht erforderlich, dass mehrere Injektorvorrichtungen an dem Rail angebunden sind. So ist von der vorliegenden Erfindung auch der Fall umfasst, dass jede Injektorvorrichtung, die sich zum Abgeben von gasförmigen Kraftstoff in einen Brennraum eignet, mit genau einem Rail zusammenwirkt.

Durch das Vorsehen des Druckspeichers kann die Menge an Boil-Off Gas, die nach einer Entsorgung, d.h. nach einer entsprechenden chemischen Umwandlung letztlich energetisch ungenutzt in die Atmosphäre abgelassen wird oder zu einem bestimmten Zeitpunkt zwangsweise in einer Brennstoffzelle umzusetzen ist, obwohl kein hinreichender Bedarf an der daraus freigesetzten Energie besteht, stark reduziert werden bzw. bei einer entsprechenden gross dimensionierten Auslegung nahezu völlig vermieden werden. Aus dem Tieftemperatur-Flüssiggasspeicher kann bspw. durch Entnahme von Flüssiggas und dem Umwandeln während seiner Abförderung in den gasförmigen Aggregatzustand dieser Brenngasanteil von dem Druckspeicher aufgenommen werden, so dass in dem Tieftemperatur-Flüssiggasspeicher der Innendruck abgesenkt bzw. auf einem vorliegenden Druckniveau gehalten werden kann und ein Ablassen von Boil-Off Gas vorerst nicht erfolgen muss. Zusätzlich oder alternativ ist aber auch denkbar, dass Boil-Off Gas, also Brenngas, welches bereits im Tankinneren des Tieftemperatur-Flüssiggasspeichers von seinem flüssigen bereits in den gasförmigen Aggregatzustand übergegangen ist, in den Druckspeicher zuzuleiten, um es dort für eine spätere Nutzung in der Verbrennungskraftmaschine bereitzuhalten. Dadurch ist es ebenfalls möglich, den Druck in dem Tieftemperatur-Flüssiggasspeicher abzusenken bzw. ein vorliegendes Druckniveau beizubehalten.

Dabei kann vorgesehen sein, dass der Druckspeicher eine Druckfestigkeit von mindestens 300 bar, vorzugsweise von mindestens 400 bar und bevorzugterweise von mindestens 500 bar aufweist. Dadurch kann in Bezug auf die Fähigkeit des Druckspeichers darin gasförmiger Kraftstoff bis zur Erreichung eines hinreichend hohen Druckniveaus aufgenommen werden.

Weiter kann nach der Erfindung vorgesehen sein, dass das System eine weitere Fluidleitung aufweist, die unter Umgehung des Druckspeichers den Tieftemperatur-Flüssiggasspeicher und das Rail fluidisch miteinander verbindet, um Brenngas in das Rail zu leiten.

Demnach kann also mit der weiteren Fluidleitung vorgesehen sein, dass eine Brenngas-Zuführung wahlweise in den Druckspeicher oder in das Rail möglich ist, wobei dies an den aktuellen Brenngasbedarf angepasst sein kann.

Nach einer optionalen Modifikation der Erfindung kann vorgesehen sein, dass die weitere Fluidleitung mit einer Pumpe, insbesondere einer Kryopumpe verbunden ist, die dazu ausgelegt ist, Flüssiggas, d.h. sich noch in seinem flüssigen Aggregatszustand befindendes Brenngas aus dem Tieftemperatur-Flüssiggasspeicher zu fördern und dabei vorzugsweise in seinen gasförmigen Aggregatszustand übergehen zu lassen. Vorzugsweise ist das Pumpwerk dieser Pumpe in dem Tieftemperatur-Flüssiggasspeicher integriert. Alternativ oder ergänzend erfolgt die Überführung des aus dem Tieftemperatur-Flüssiggasspeicher entnommenem Kraftstoffes in Flüssigform in den gasförmigen Aggregatzustand vorzugsweise innerhalb der Pumpe, d.h. das Pumpwerk und die Vorrichtung für den eigentlichen Wärmeeintrag in den Kraftstoff befinden sich vorzugsweise in einem gemeinsamen Gehäuse. Alternativ oder ergänzend befindet sich der Pumpenantrieb zum Antreiben des Pumpwerkes bevorzugt ausserhalb der Pumpe und besonders bevorzugt ausserhalb des Tieftemperatur-Flüssiggasspeichers. Diese Pumpe ist vorzugsweise als Kryopumpe ausgeführt, weswegen im Folgetext der Begriff Kryopumpe verwendet wird, was allerdings keineswegs bedeuten soll, dass die Erfindung dahingehend eingeschränkt ist.

So kann der Druckspeicher bspw. über ein Ventil mit dem Ausgang der Kryopumpe verbunden sein, wobei aber zudem auch eine direkte Verbindung von der Kryopumpe zum Rail vorgesehen sein kann.

Dabei kann auch ein Ventil vorgesehen sein, das dazu ausgelegt ist, von dem Tieftemperatur-Flüssiggasspeicher stammendes und in seinen gasförmigen Aggregatzustand gebrachtes Brenngas an den Druckspeicher oder mittels der weiteren Fluidleitung unter Umgehung des Druckspeichers in das Rail zu leiten.

Zudem ist nach der Erfindung ein mit dem Tieftemperatur-Flüssiggasspeicher in Fluidverbindung stehendes Boil-Off Ventil zum Ablassen von Boil-Off Gas aus dem Tieftemperatur-Flüssiggasspeicher vorgesehen. Wie dem Fachmann bekannt, versteht man unter dem Begriff *Boil-Off Gas*, Gas resp. Brenngas, welches bei der Betankung in Form von Flüssiggas in den Tieftemperatur-Flüssiggasspeicher eingebracht worden ist und durch den Zuwachs an innerer Energie aufgrund des niemals ganz vermeidbaren Wärmeeintrags bereits im Inneren des Tieftemperatur-Flüssiggasspeichers in den gasförmigen Aggregatzustand übergegangen, d.h. verdunstet ist. Bekanntermassen führt das Verdunsten einer abgeschlossenen (isochoren) Gasmenge zu einem Druckanstieg. Durch dieses gezielte Ablassen von Boil-Off Gas kann der Innendruck im Tieftemperatur-Flüssiggasspeichers innerhalb der zulässigen Grenzwerte gehalten werden.

Weiter kann dabei vorgesehen sein, dass stromabwärts des Boil-Off Ventils ein Kompressor angeordnet ist, dessen Oberdruckseite mit dem Druckspeicher fluidisch verbunden ist, um das über das Boil-Off Ventil entnommene Boil-Off Gas auf ein entsprechend hohes Druckniveau verdichten zu können, damit es dem Druckspeicher zugeführt werden kann.

Demnach kann also vorgesehen sein, dass das abgelassene Boil-Off Gas über einen Kompressor weiter verdichtet wird, um es nach einer Zwischenspeicherung in dem Druckspeicher entsprechend seiner ursprünglichen Bestimmung zu verwenden, es also dem Rail zuzuführen, wo es über mindestens eine Injektorvorrichtung in einen Brennraum eingeführt wird. Auch so wird die Effizienz der Kraftstoffnutzung weiter erhöht, da nun ein höherer Anteil des ursprünglich in Flüssigform den Tieftemperatur-Flüssiggasspeicher getankten Brenngases dem bestimmungsgemässen Verwendungszweck zugeführt werden kann.

Weiter ist nach der Erfindung vorgesehen, dass stromabwärts des Boil-Off Ventils eine Brennstoffzelle angeordnet ist, um den gasförmigen Kraftstoff in elektrische Energie zu wandeln, wobei vorzugsweise eine Batterie zum Zwischenspeichern der dabei erzeugten elektrischen Energie vorgesehen ist. Eine solche Art von Energierückgewinnung ist allerdings auch nur dann möglich, wenn die Brenngasqualität die Anforderungen der Brennstoffzelle erfüllt. Bekanntermassen sind die erforderlichen Brenngasqualitäten für Brennstoffzellen mitunter deutlich höher als für Verbrennungskraftmaschinen. Ferner erfordert eine solche Art der Energierückgewinnung einen vergleichsweise hohen apparativen Aufwand.

Unter diesen gegebenen Voraussetzungen kann bspw. dann, wenn in dem Druckspeicher kein weiteres Boil-Off Gas mehr gehalten werden kann, weiter verhindert werden, dass dieses ungenutzt an die Atmosphäre (vorzugsweise über einen das Gas unschädlich machenden Katalysator) abgegeben werden muss.

Nach einer weiteren Modifikation der vorliegenden Erfindung kann vorgesehen sein, dass das Rail mit einer Saugseite des Kompressors fluidisch verbunden ist, um im Rail nicht benötigtes Brenngas dem Druckspeicher zuzuführen. Diese Verbindung kann über ein Ventil erfolgen, das eine Fluidverbindung je nach Ventilstellung zulässt oder nicht.

So kann Gas, das bei Beendigung eines Einspritzvorgangs in dem Rail zurückgeblieben ist, über den Kompressor in den Druckspeicher eingebracht werden, was insbesondere bei einem Abschaltewunsch an die Verbrennungskraftmaschine oder einer Notabschaltung sinnvoll ist.

Weiter kann nach der Erfindung vorgesehen sein, dass bei Vorhandensein einer Brennstoffzelle eine Fluidverbindung zu dem Rail geschaffen werden kann, um im Rail nicht benötigtes Brenngas der Brennstoffzelle zuzuführen.

Nach einer weiteren Modifikation der Erfindung kann vorgesehen sein, dass das System ferner ein Druckspeicher-Auslassventil zum wahlweisen Ablassen von in dem Druckspeicher befindlichen Brenngas an das Rail umfasst. So kann der Bedarf einer Abgabe des in dem Druckspeicher befindlichen Brenngas an das Rail exakt gesteuert oder geregelt werden.

Weiter kann nach der Erfindung vorgesehen sein, dass das System ferner eine stromaufwärts des Rails angeordnete Gasdruck-Stelleinheit zum Einstellen des Druckniveaus von aus dem Tieftemperatur-Flüssiggasspeicher stammenden und in den gasförmigen Aggregatszustand übergegangenen Kraftstoff, der in das Rail einströmt, umfasst, wobei vorzugsweise die Gasdruck-Stelleinheit jeweils separat mit dem Druckspeicher und dem Tieftemperatur-Flüssiggasspeicher verbunden ist.

Vorzugsweise ist ein mit dem Tieftemperatur-Flüssiggasspeicher in Fluidverbindung stehendes Zulaufventil zum Einbringen von Kraftstoff in den Tieftemperatur-Flüssiggasspeicher vorgesehen.

Zudem kann nach der Erfindung der Tieftemperatur-Flüssiggasspeicher mehrwandig ausgestaltet sein, um einen Tankinhalt thermisch besonders effektiv zu isolieren.

Nach der Erfindung kann vorgesehen sein, dass der Tieftemperatur-Flüssiggasspeicher dazu ausgelegt ist, einen Tankinnendruck von mindestens 6 bar, vorzugsweise von mindestens 8 bar widerstehen zu können, jedoch nur einen maximalen Tankinnendruck von bis zu 16 bar, vorzugsweise bis zu 12 bar, bevorzugterweise bis zu 10 bar widerstehen zu können. Dies führt zu hohen Kosteneinsparungen des Tieftemperatur-Flüssiggasspeichers, welche zu einer Überkompensation der Mehrkosten für die zusätzlichen Komponenten und Bauteile führen, die für ein erfindungsgemässes System nötig sind.

Eine Gemeinsamkeit zwischen einem Tieftemperatur-Flüssiggasspeicher und einem Kryotank ist die Eigenschaft, dass beide thermisch sehr gut isolierend sind. Im Unterschied zu einem Kryotank weist ein Tieftemperatur-Flüssiggasspeicher eine vergleichsweise niedrige Druckfestigkeit auf, die für Wasserstoff in der oben genannten Größenordnung liegt. Die Druckfestigkeit eines Kryotanks liegt hingegen bei mindestens 50 bar. Da ein Kryotank zugleich die Anforderung einer extrem guten thermischen Isolation und einer hohen Druckfestigkeit erfüllt, sind diese extrem teuer.

Dem Fachmann ist bekannt, dass Wasserstoff-Kryotanks eine Druckfestigkeit bis zu einer Grössenordnung von 1000 bar aufweisen können. Wenn ein Kryotank, der in einem erfindungsgemässen System zur Anwendung käme könnte, man auch dann Boil-Off Gas dem vorgesehenen Nutzungspfad zuführen, wenn das sich im Kryotank befindende Boil-Off Gas ein Druckniveau aufweist, welches geringer als der Sollwert-Raildruck ist. Auf diese Weise könnte man zumindest die Menge des vor einer Nachbetankung abzusaugenden Boil-Off Gases reduzieren, was zugegebenermassen lediglich einen geringen Vorteil darstellt. Sofern allerdings ein Kryotank lediglich eine Druckfestigkeit von bspw. 50 bar hat, der vergleichsweise kostengünstig ist, dann ist der Einsatz eines solchen Kryotanks in einem erfindungsgemässen System definitiv sehr vorteilhaft im Vergleich zu einer Nutzung gemäss dem Stand der Technik eines solchen Kryotanks.

Die Erfindung betrifft zudem ein Fahrzeug, insbesondere eine mobile Arbeitsmaschine mit einem Kraftstoffeinspritzsystem nach einem der vorhergehenden Varianten.

Weitere Vorteile, Merkmale und Einzelheiten der Erfindung werden aufgrund der nachfolgenden Figurenbeschreibung ersichtlich. Dabei zeigen:
- Fig. 1:: eine schematische Darstellung einer nicht erfindungsgemäßen Vorrichtung, und
- Fig. 2:: eine schematische Darstellung einer bevorzugten Ausführungsform der vorliegenden Erfindung.

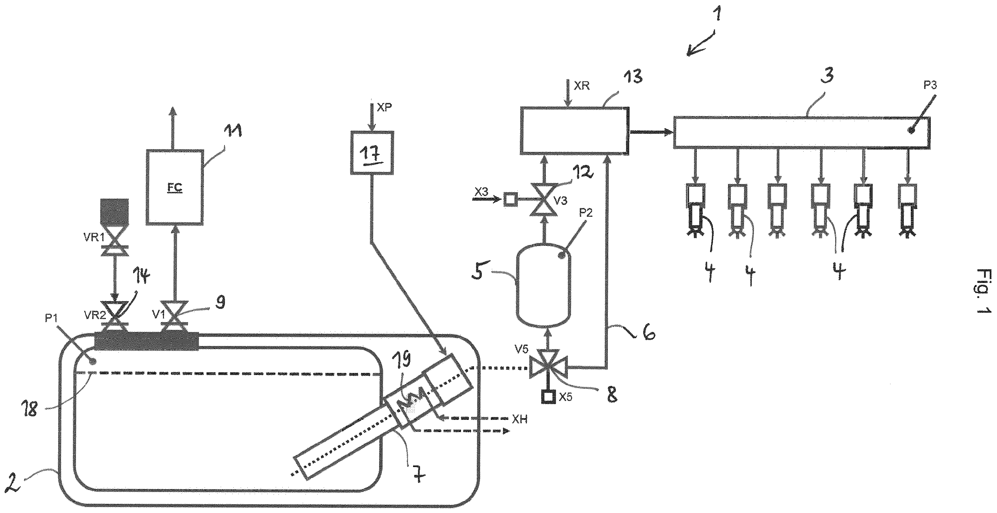

Fig. 1 zeigt eine Ausführungsform, welche jedoch nicht Teil der vorliegenden Erfindung ist. Die Fig. 1 stellt einen Kraftstoffpfad ausgehend von einem Tieftemperatur-Flüssiggasspeicher 2 bis zur Kraftstoff-Hochdruck-Einspritzung durch die mehreren Injektorvorrichtungen 4 dar. Ein solches Kraftstoffeinspritzsystem kann beispielsweise für Wasserstoff oder Erdgas verwendet werden.

Das allgemeine Wirkprinzip basiert dabei auf einer Entnahme von Brenngas (Kraftstoff) aus dem Tieftemperatur-Flüssiggasspeicher 2, bspw. über die Pumpe 7, die insbesondere als Kryopumpe 7 ausgeführt sein kann, das bei der Entnahme oder nachgelagert dazu in seinem Druckniveau so angehoben wird, dass es über eine Fluidleitung (bspw. die Fluidleitung 6) in ein Rail 3 eingeführt werden kann, von wo aus eine Einspritzung in einen Brennraum einer Verbrennungskraftmaschine über eine Injektorvorrichtung 4 erfolgen kann.

Generell untergliedert sich das Innenvolumen des Tieftemperatur-Flüssiggasspeichers 2 in zwei Bereiche, was durch die gestrichelte Linie 18 angedeutet ist. Der Anteil des als Flüssiggas vorliegenden Brenngases belegt das Volumen unterhalb der gestrichelten Linie 18 und in dem darüber liegenden Restvolumen befindet sich bereits verdunstetes Brenngas, sogenanntes Boil-Off Gas. Bereits unmittelbar nach einer Betankung eines Tieftemperatur-Flüssiggasspeichers 2 mit einem Flüssiggas befindet sich bereits ein kleiner Anteil des als Flüssiggas zugeführten Brenngases im gasförmigen Aggregatszustand. Daher wird bei einer Betankung eines Tieftemperatur-Flüssiggasspeichers 2 nicht dessen gesamte prinzipiell nutzbare Kapazität mit Flüssiggas befüllt. Für das Anwendungsbeispiel Wasserstoff beträgt unmittelbar nach einer für mobile Anwendungen üblichen Betankung eines Tieftemperatur-Flüssiggasspeichers 2 die Innentemperatur typischerweise ca. minus 250° C und der Innendruck weist bereits ein Druckniveau von etwa 4 bar auf.

Der niemals komplett vermeidbare Wärmeeintrag in den Tieftemperatur-Flüssiggasspeicher 2 erwirkt eine Verdunstung von Flüssiggas, d.h. einem Boil-Off. Weiter führt der Wärmeeintrag selbstverständlich auch zu einem gewissen Anstieg der Innentemperatur des Tieftemperatur-Flüssiggasspeichers 2.

Sobald die bereits im Tieftemperatur-Flüssiggasspeicher 2 vorhandene Menge des Boil-Off Gases zur Erreichung eines bestimmten Druckniveaus geführt hat, muss die darüber hinausreichende Menge abgelassen werden und nach dem Stand der Technik kann dieses Boil-Off Gas nicht mehr dem eigentlich vorgesehenen Verwendungszweck zugeführt werden. Daher ist eine extrem wirkungsvolle thermische Isolation des Tieftemperatur-Flüssiggasspeichers 2 von fundamentaler Wichtigkeit.

Da das Boil-Off Gas aus Sicherheitsgründen und aus Umweltschutzgründen (insbesondere bei LNG) nicht unverbrannt an die Umgebung abgegeben werden darf, bedeutet das Ablassen von Boil-Off Gas im Stand der Technik nicht nur einen Energieverlust, sondern verlangt auch einen apparativen Zusatzaufwand für dessen Entsorgung. Wie bereits erläutert, kommt dieser zum Einsatz, wenn das Druckniveau im Tieftemperatur-Flüssiggasspeicher 2 einen bestimmten etwas unterhalb seiner maximalen Druckfestigkeit liegenden Druckwert erreicht hat.

Insbesondere bei Tanksystemen für mobile Anwendungen zur Speicherung von Flüssigwasserstoff kommen bspw. Einrichtungen zum Einsatz, bei denen der Boil-Off Wasserstoff, der nicht im Tieftemperatur-Flüssiggasspeicher gehalten werden kann, durch einen geeigneten Katalysator geleitet wird, um das Verbrennen bevorzugt ohne Ausbildung einer Flamme und bereits unter vergleichsweise niedrigen Umgebungstemperaturen sicher zu stellen. Nachteilig an einem solchen Vorgehen ist, dass eine solche Einrichtung das Boil-Off Gas völlig ungenutzt verbraucht.

Daher ist aus energetischer Sicht die Verwertung des abzulassenden Boil-Off Gases über eine Brennstoffzelle 11 und eine Speicherung der daraus erzeugten elektrischen Energie in einer Batterie vorteilhaft oder auch eine unmittelbare Verwendung dieser elektrischen Energie. Lässt sich die unmittelbare Weiterverwendung der von der Brennstoffzelle 11 produzierten elektrischen Leistung zeitlich nicht mit dem Ablassen des Boil-Off Gases koordinieren, erfordert diese Art der Umsetzung des Boil-Off Gases einen elektrischen Energiespeicher, bspw. in Form einer Batterie. Allerdings ist der apparative Aufwand für eine solche Energierückgewinnung nochmals höher als eine einfache Entsorgungsvorrichtung.

Ferner erfordert die Nutzung des Brenngases eine Gasqualität bzw. Reinheit, die deutlich höher ist als für die Nutzung in einer Verbrennungskraftmaschine.

Das Boil-Off Gas gelangt in die Brennstoffzelle 11 über das als Überdruckventil wirkende Boil-Off Ventil 9, das vorzugsweise an einem Bereich des Tieftemperatur-Flüssiggasspeichers 2 angeordnet ist, an dem sich Boil-Off Gas ansammelt. Das Boil-Off Gas, das aufgrund der Beschaffenheit des Tieftemperatur-Flüssiggasspeichers 2 keinen Druck oberhalb von ca. 10 bar aufweisen kann, ist nicht direkt für solche Anwendungen nutzbar, bei denen ein unter sehr hohem Druck stehendes Gas erforderlich ist, wie bspw. eine Direkteinspritzung in eine Verbrennungskraftmaschine.

Zur dosierten Brenngas-Entnahme aus dem Tieftemperatur-Flüssiggasspeicher 2 ist bevorzugterweise eine Kryopumpe 7 vorgesehen, die besonders bevorzugt im Tieftemperatur-Flüssiggasspeicher 2 integriert ist. Hierbei erfolgt zunächst eine Ansaugung und Verdichtung des in Flüssigform vorliegenden Brenngases. Bei der Abförderung aus dem Tieftemperatur-Flüssiggasspeicher 2 erfolgt dann ein Übergang in den gasförmigen Aggregatzustand. Bevorzugt erfolgt innerhalb der internen Gas-Förderstrecke der Kryopumpe 7 eine dosierbare Wärmebeaufschlagung des zunächst noch in Flüssigform vorliegenden Brenngases über eine Heizeinrichtung 19, bspw. in der Form eines Wärmetauschers. Im Zusammenspiel mit dem in der Kryopumpe 7 enthaltenen Pumpwerk, welches über einen externen Pumpenantrieb 17 variabel angetrieben werden kann, was wiederum eine bedarfsgerechte Brenngasentnahme aus dem Tieftemperatur-Flüssiggasspeicher 2 ermöglicht. Ein besonderes Augenmerk bei der Integration der Kryopumpe 7 in den Tieftemperatur-Flüssiggasspeicher 2 ist hierbei auf eine gute thermische Isolation der folgenden drei Durchgangsstellen der Kryopumpe 7 zu richten:
a) die Fluidverbindung über die der Kraftstoff aus dem Inneren des Tieftemperatur-Flüssiggasspeicher 2 nach außen geführt wird,
b) die Leistungszuführung an das Pumpwerk der Kryopumpe 7 bzw. an die Ankopplung der das Pumpwerk antreibenden Komponente, und
c) die für das Zuführen von thermischer Energie erforderliche Verbindung.

Im Ausführungsbeispiel ist die Kryopumpe 7 im Tieftemperatur-Flüssiggasspeicher 2 integriert. Daher vermeidet eine externe Installation des Pumpenantriebs 17 einen Eintrag ihrer Verlustwärme in den Tieftemperatur-Flüssiggasspeicher 2.

Weiter kann vorgesehen sein, dass die im Tieftemperatur-Flüssiggasspeicher 2 integrierte Kryopumpe 7 dazu ausgelegt ist, das von ihr geförderte Brenngas mit einem Druckniveau von wenigen hundert bar auszugeben, wodurch das Brenngas ohne eine weitere Verdichtung bereits einer Hochdruck-Anwendung zugeführt werden kann, insbesondere einer Kraftstoff-/Brenngas-Hochdruckeinspritzung in einer Verbrennungskraftmaschine. Hierdurch wird ein hoher Energieanteil, der zuvor für die Verflüssigung des Brenngases aufgewendet werden musste, damit dieses dem Tieftemperatur-Flüssiggasspeicher 2 in flüssiger Form zugeführt werden konnte dahingehend genutzt, dass das aus dem Tieftemperatur-Flüssiggasspeicher 2 über die Kryopumpe 7 entnommene und verdampfte Brenngas bereits stark komprimiert ist.

Isolationstechnisch einfacher in der Handhabung und von der Erfindung ebenfalls umfasst, ist eine solche Anordnung bei der sich die eigentliche Kryopumpe 7 - d.h. das Pumpwerk und der zum Auslösen der Verdunstung nötige Wärmeeintrag - außerhalb des Tieftemperatur-Flüssiggasspeichers 2 befinden. Eine derartige Anordnung wird bspw. in der WO 2015/078962 A1 beschrieben. Allerdings weist ein derart bereitgestelltes Brenngas ein weitaus geringeres Druckniveau auf, welches für eine Saugrohr-Einblasung noch ausreichend sein kann, für eine Direkteinspritzung resp. eine Kraftstoff-Hochdruck-Einspritzung jedoch einen zu geringen Druck aufweist.

Die ausgehend von dem Tieftemperatur-Flüssiggasspeicher 2 für die Konditionierung des Brenngases zur Nutzung als Kraftstoff in einer Verbrennungskraftmaschine erforderliche Energie ist nicht unerheblich und setzt sich aus der Energieversorgung des Pumpwerkes und der Erwärmung des Flüssiggases im Kraftstoffpfad zusammen. Im Anwendungsbeispiel von Flüssigwasserstoff ist ausgehend von ca. -250° C eine Temperaturanhebung auf 0° C bis 25° C erforderlich. Der für diese Temperaturanhebung erforderliche Energiebedarf kann bei einer mit dem Kraftstoffeinspritzsystem 1 versehenen Verbrennungskraftmaschine durch das Entziehen von Wärmeenergie aus dem Motorkühlwasser abgedeckt werden.

In einer einfachen Ausführung werden die Leistungszuführung an das Pumpwerk der Kryopumpe 7 und die Wärmezufuhr durch die Heizeinrichtung 19 in das von der Kryopumpe 7 geförderte Brenngas in Abhängigkeit eines Raildruckes P3 und eines am Ausgang der Kryopumpe 7 erfassten Temperaturmesswert festgelegt.

Ein geeignetes Rail 3 für einen 6-Zylinder Wasserstoffmotor mit einem Gesamthubraum von ca. 12 Litern und einer Maximalleistung von ca. 400 kW weist ein Innenvolumen zwischen 1,5 bis 2,5 Litern auf. Der Raildruck P3 liegt typischerweise bei 300 bar. Aus Sicherheitsgründen darf bei einer abgeschalteten Verbrennungskraftmaschine das Rail 3 nicht mit dem unter Hochdruck stehenden Brenngas befüllt bleiben. So kann vorgesehen sein, dass bei einem gewünschten Abschalten der Verbrennungskraftmaschine zunächst die Brenngaszufuhr deaktiviert wird wohingegen die Verbrennungskraftmaschine solange weiter betrieben wird, bis ein ausreichender Druckabfall im Rail 3 vorliegt.

Damit das Betanken eines Tieftemperatur-Flüssiggasspeichers 2 überhaupt möglich ist, muss zunächst das darin befindliche Boil-Off Gas abgesaugt werden. Nach seiner Absaugung kann dieses natürlich erneut einem Tieftemperatur-Flüssiggasspeicher 2 zugeführt werden, muss aber zunächst wieder verflüssigt werden.

Anstelle einer einzigen Verbindung über die Fluidleitung 6 von dem Tieftemperatur-Flüssiggasspeicher 2 zu dem Rail 3, weist die Ausführungsform einen Parallelpfad auf, in dem ein Druckspeicher 5 integriert ist. Über ein Ventil 8 kann eine Gasverbindung vom Ausgang der Kryopumpe 7 zum Rail 3 über die Fluidleitung 6 und/oder über einen zur Fluidleitung 6 parallel angeordneten Pfad, der den Druckspeicher 5 aufweist, geschaffen werden. So kann vorgesehen sein, dass beide parallel zueinander verlaufenden Abschnitte zu einem Eingang einer Gasdruck-Stelleinheit 13 geführt sind. Auch kann vorgesehen sein, dass die Gasverbindung zum Druckspeicher 5 unterbrochen ist, wenn die Gasverbindung über die Fluidleitung 6 aktiv ist und umgekehrt. So kann in einer weiteren Ventilstellung des Ventils 8 eine Gasverbindung vom Ausgang der Kryopumpe 7 zum Druckspeicher 5 vorliegen, wohingegen die Gasverbindung zur Gasdruck-Stelleinheit 13 unterbrochen ist. In einer optionalen weiteren Ventilstellung sind die Gasverbindungen über die beiden parallel angeordneten Gaspfade hin zur Gasdruck-Stelleinheit 13 unterbrochen.

Sofern in einem ersten Anwendungsszenario der Gasverbrauch und damit die Gasentnahme über die Kryopumpe 7 derart hoch ist, dass die im Tieftemperatur-Flüssiggasspeicher 2 freiwerdende Kapazität (erkennbar durch ein Absinken der gestrichelten Linie 18), welche zum Halten von Boil-Off Gas zur Verfügung steht, ausreichend groß ist, befindet sich das Ventil 8 zumindest dann, wenn dem Rail 3 Brenngas zugeführt wird, dauerhaft in derjenigen Ventilposition, bei der Brenngas über die weitere Fluidleitung 6 geführt wird und vorzugsweise niemals in der Position, bei der Brenngas in den Druckspeicher 5 geführt wird. Das Ventil 8 sperrt vorzugsweise unentwegt die zum Druckspeicher 5 führende Gasleitung, die im Stand der Technik nicht vorhanden ist.

Sofern in einem zweiten Anwendungsszenario über die Kryopumpe 7 überhaupt keine Gasentnahme aus dem Tieftemperatur-Flüssiggasspeicher 2 erfolgt, weil bspw. die Anwendung stillgelegt, bzw. die Verbrennungskraftmaschine abgeschaltet ist, ist nach einer gewissen Zeit die Kapazität des Tieftemperatur-Flüssiggasspeichers 2 zum Halten von weiterem Boil-Off Gas bei einem bestimmten Bauart-bedingten bzw. einem zulässigen sicherheitstechnischen Innendruck erschöpft. Spätestens dann wird das Ventil 8 in diejenige Ventilposition gebracht, in der ein Einströmen von aus dem Tieftemperatur-Flüssiggasspeicher 2 stammendem Brenngas in den Druckspeicher 5 möglich ist, und die Kryopumpe 7 aktiviert. Brenngas in Flüssigform wird demnach aus dem Tieftemperatur-Flüssiggasspeicher 2 entnommen und in Gasform dem Druckspeicher 5 zugeführt. Dadurch erhöht sich das Volumen im Tieftemperatur-Flüssiggasspeicher 2, das durch Boil-Off Gas eingenommen werden kann, was gleichbedeutend mit einer Kapazitätserhöhung für das Speichern von Boil-Off ist, und es kommt zunächst zu einem Absinken des Innendrucks im Tieftemperatur-Flüssiggasspeicher 2.

Bevorzugt wird dabei die Kryopumpe 7 dahingehend koordiniert betrieben, dass lediglich genau die Menge an Flüssiggas entnommen wird, um fortlaufend genau die Kapazität im Tieftemperatur-Flüssiggasspeicher 2 bereitzuhalten, die dafür benötigt wird, um die zunehmende Menge an Boil-Off Gas, die bspw. durch einen nicht vermeidbaren Wärmeeintrag entsteht, weiterhin im Tieftemperatur-Flüssiggasspeicher 2 halten zu können. Diese Maßnahme kann nun solange aufrechterhalten werden, bis im Druckspeicher 5 der zulässige Maximaldruck oder der Maximaldruck, der von der Kryopumpe 7 bereitgestellt werden kann, erreicht ist. Nach dem Erreichen des für die Limitierung ausschlaggebenden Maximaldrucks, der bei mehr als 300 bar liegen kann, muss die Menge des nachfolgend entstehenden Boil-Off Gases, welches nicht in dem Tieftemperatur-Flüssiggasspeicher 2 gehalten werden kann, über das Boil-Off Ventil 9 abgelassen werden.

Alternativ zu einer kontinuierlichen Entnahme von Brenngas in Flüssigform aus dem Tieftemperatur-Flüssiggasspeicher 2 mittels der Kryopumpe 7, kann über diese auch eine gepulste Förderung vorgesehen sein.

In einem dritten Anwendungsszenario befindet sich im Druckspeicher 5 bereits eine gewisse Menge an Boil-Off Gas. Ferner besteht im Tieftemperatur-Flüssiggasspeicher 2 eine gewisse freie Kapazität für das Halten von Boil-Off Gas.

Sofern das Druckniveau des im Druckspeicher 5 enthaltenen Boil-Off Gases ausreichend hoch zur Versorgung des vorgesehenen Prozesses ist, der im vorgestellten Anwendungsbeispiel die Direkteinspritzung von Brenngas in eine Verbrennungskraftmaschine ist, wird bevorzugt das Boil-Off Gas aus dem Druckspeicher 5 bezogen, wohingegen das in Flüssigform im Tieftemperatur-Flüssiggasspeicher 2 vorhandene Brenngas für eine spätere Verwendung aufgespart wird. Im vorgestellten Anwendungsbeispiel einer Direkteinspritzung von Brenngas für die Hochdruckeinspritzung bei einem Raildruck-Sollwert von 300 bar muss ein Mindestdruck von 300 bar zuzüglich einer gewissen Reserve (s.u.) im Druckspeicher 5 vorhanden sein, damit die Anwendung mit Brenngas aus dem Druckspeicher 5 betrieben werden kann.

Selbstverständlich kann im Fall eines bereits höheren Druckniveaus in dem Druckspeicher 5 die Anwendung aus diesem Vorrat nur solange betrieben werden, bis der dortige Druck auf einen Schwellenwert, der dem Raildruck-Sollwert zuzüglich einer gewissen Reserve entspricht, abgefallen ist.

Dieser Schwellenwert befindet sich etwas oberhalb über dem zum Ausführen der Anwendung erforderlichen Druckniveaus. In Bezug auf das Anwendungsbeispiel könnte der Schwellenwert mit 320 bar festgelegt sein. Dies erklärt sich aus der Annahme, dass eine gewisse Reserve, die hier mit 20 bar beziffert ist, benötigt wird, um den Raildruck-Sollwert von 300 bar mit einer entsprechend akzeptablen Sicherheitsmarge bereitstellen zu können, da entlang der Gasverbindung ein gewisser Druckabfall unvermeidbar ist, gewisse Druckschwankungen auftreten können und eine gewisse Reserve an der Gasdruck-Stelleinheit 13 erforderlich sein kann, damit eine ausreichend genaue Einhaltung des Raildruck-Sollwertes möglich ist.

Es ist somit klar, dass in dem Druckspeicher 5 immer eine gewisse Menge an Brenngas verbleibt, die nicht unmittelbar genutzt werden kann. Allerdings ist diese Gasmenge nicht mit einem Gasverlust gleichzusetzen, weil nach einem weiteren Zuströmen von Brenngas, die vorher nicht mehr dem vorgesehenen Prozess zuführbare Gasmenge nachträglich sehr wohl von diesem verwertet werden kann. Dies ist eher vergleichbar mit einer Sockelmenge an Brenngas, die in dem Druckspeicher 5 verbleibt. Nachdem einmal der Schwellendruck von bspw. 320 bar überschritten worden ist, kann die komplette Gasmenge, die dem nachfolgend in den Druckspeicher 5 zuströmendem Brenngas entspricht unmittelbar seiner eigentlich vorgesehenen Verwendung zugeführt werden. Dieser Sockel verbleibt dann immer auf einem Druckniveau dieses Schwellendrucks. Damit bei einem solchen vergleichsweise hohen Schwellendruck eine nennenswerte Gasmenge gespeichert und seiner Anwendung zugeführt werden kann, empfiehlt sich die Verwendung eines Druckspeichers mit einer vergleichsweise hohen Druckfestigkeit von bspw. mindestens 350 bar. Entsprechendes gilt selbstverständlich für den Ausgangsdruck, den die verwendete Kryopumpe 7 oder ein der Kryopumpe 7 nachgeschalteter Verdichter (nicht dargestellt) aufbauen kann.

Sofern der mit dem Gas resp. Brenngas zu versorgende Prozess ein wesentlich geringeres Druckniveau erfordert, bspw. die Kraftstoffversorgung einer Verbrennungskraftmaschine mit einer Saugrohreinspritzung, ist der Schwellendruck resp. der Sockel weitaus geringer und liegt in einer Größenordnung von einigen zehn bar. Hierbei könnten ein Druckspeicher 5 und eine Kryopumpe 7 mit einem jeweils wesentlich geringeren Nenndruck zum Einsatz kommen.

Bei einem Betrieb der Vorrichtung kann vorgesehen sein, dass in dem Druckspeicher 5 wesentlich höhere Gasdrücke vorhanden sind, als der bestimmungsgemäße Gasdruck, der für die vorgesehene Anwendung benötigt wird. Im Anwendungsbeispiel der Gaszuführung für ein Rail 3 muss das Brenngas unter einem genau definierten Druck zugeführt werden und eine Drucküberschreitung soll unterbleiben. Daher kann der Einsatz einer Gasdruck-Stelleinheit 13 sinnvoll sein, die als Aktuator einer Regelung oder Steuerung dient. Bevorzugt kommt ein Druckspeicher-Auslassventil 12 zum Einsatz, damit die Fluidverbindung zwischen dem Druckspeicher 5 und der Gasdruck-Stelleinheit 13 geöffnet oder unterbrochen sein kann. Alternativ oder ergänzend ist entlang der Fluidverbindung zwischen dem Druckspeicher 5 und der Gasdruck-Stelleinheit 13 bevorzugt ein Druckbegrenzer (nicht eingezeichnet) vorhanden. Bei Vorhandensein befinden sich das Druckspeicher-Auslassventil 12 und der Druckbegrenzer jeweils bevorzugt in unmittelbarer Nähe zum Auslass des Druckspeichers 5.

Für das Anwendungsbeispiel kommt bevorzugt ein Druckbegrenzer zum Einsatz dessen Ausgangsdruck händisch auf einen fest einstellbaren Wert gesetzt werden kann oder optional durch Fernwirken.

Die Gasdruck-Stelleinheit 13 wird bevorzugt in unmittelbarer Nähe zum Rail 3 angeordnet, damit die betreffende Fluidverbindung möglichst kurz ausgeführt werden kann, damit sich die Zeiträume für das Entgegenwirken auf Druckschwankungen im Rail 3 verkürzen, was wiederum eine bessere Möglichkeit zur Unterdrückung von Druckschwankungen im Rail 3 bietet, d.h. genau dort, wo der Druck möglichst nah auf seinem Sollwert gehalten werden soll.

Ein grosser Vorteil der Aufgabentrennung der Druckbegrenzung (durch den Druckbegrenzer) und der stromabwärts davon erfolgenden Einstellung des Raildrucks (durch die Gasdruck-Stelleinheit 13) ist, dass der Druckbegrenzer per se in der Lage sein muss ein hohes Druckgefälle erzielen zu können, wohingegen die Gasdruck-Stelleineinheit 13 zur Einstellung des Raildrucks eine hohe Präzision und schnelle Dynamik erfordert. Bei Vorhandensein eines Druckbegrenzers und einer Gasdruck-Stelleinheit 13 zur Einstellung des Raildrucks P3 als zwei getrennte Baueinheiten besteht keine Notwendigkeit, dass der Ausgangsdruck der Druckbegrenzung 12 einen bestimmten Sollwert exakt einhält.

Wie zu erkennen, sieht das Ausführungsbeispiel im Fall einer direkten Gaszufuhr aus dem Tieftemperatur-Flüssiggasspeicher 2 an das Rail 3 eine Nutzung der Gasdruck-Stelleinheit 13 zur Einstellung des Raildrucks P3 vor. Optional kann zwischen dem rechtsseitig im Schaltbild eingezeichneten Ausgang des Ventils 8 und dem Eingang der Gasdruck-Stelleinheit 13 ein Druckausgleichsbehälter (nicht dargestellt) vorgesehen sein.

Damit im Druckspeicher 5 zur späteren Versorgung der Verbrennungskraftmaschine ein ausreichend hohes Brenngas-Druckniveau aufgebaut werden kann, sollte eine Gaszufuhr von mindestens 350 bar möglich sein; bevorzugt ein Druckniveau von mindestens 400 bar. Wenn die vorhandene Kryopumpe 7 kein ausreichend hohes Druckniveau bereitstellen kann, ist dies über eine ein- oder mehrstufige der Kryopumpe 7 nachgeschaltete Verdichtung (nicht dargestellt) möglich.

In einer bevorzugten Variante kann sich die zweite Verdichtungsstufe zwischen dem Ventil 8 und dem Druckspeicher 5 befinden. Sodann ist eine Kryopumpe 7 ausreichend, die in Bezug auf das oben eingeführte Zahlenbeispiel einen Ausgangsdruck von 320 bar abgeben kann.

In einer weiteren besonders bevorzugten Variante befindet sich eine zweite Verdichtungsstufe stromaufwärts des Ventils 8. Sodann könnte eine Kryopumpe 7 zum Einsatz kommen, deren maximaler Ausgangsdruck kleiner als 320 bar ist.

Mit der bisher beschriebenen, nicht erfindungsgemäßen Ausführungsform kann somit erreicht werden, dass Boil-Off Gas seiner ursprünglichen Nutzung zugeführt werden kann.

Allerdings weist die bisher beschriebene Ausführungsform zusätzliches Verbesserungspotenzial auf, was am Beispiel von Wasserstoff nachfolgend erklärt wird.

Dem Fachmann ist klar, dass in dem Temperatur- und Druckbereich, der für die Speicherung von Flüssigwasserstoff relevant ist, der Einfluss einer relativen Temperaturänderung auf die Dichte des Flüssigwasserstoffes weitaus geringer als der Einfluss einer relativen Druckänderung ist, allerdings unter der Voraussetzung, dass die Druckänderung nicht ausschlaggebend für eine Änderung des Aggregatzustands ist. Eine extrem hohe Abnahme der Dichte ergibt sich bei einem Phasenübergang vom flüssigen in den gasförmigen Aggregatszustand.

Der im Tieftemperatur-Flüssiggasspeicher 2 enthaltene Flüssigwasserstoff weist bspw. bei einer Temperatur von -250° C und einem Druckniveau von 10 bar eine Dichte von knapp 70 g/l auf. Ist im Zuge des Wärmeeintrags die Innentemperatur auf -242° C angestiegen, liegt die Dichte des verbliebenen Flüssigwasserstoffes immerhin noch bei knapp 50 g/l. Aufgrund der hochwirksamen thermischen Isolation von Tieftemperatur-Flüssiggasspeichers 2 ist die Standzeit für einen solchen Temperaturanstieg relativ lang und liegt bei etwa zwei Wochen, sofern - ausgenommen von dem notwendig werdenden Ablass von Boil-Off Wasserstoff - keine Wasserstoffabgabe erfolgt.

Der sich unter den gleichen Umgebungsbedingungen im Tieftemperatur-Flüssiggasspeicher 2 befindende Boil-Off Wasserstoff und damit gasförmiger Wasserstoff weist eine Dichte von etwa 14 g/l auf, der um einen Faktor von ca. 3.5 kleiner als diejenige von flüssigem Wasserstoff ist.

In der anhand von Fig. 1 beschriebenen Ausführungsform muss demnach zur Ermöglichung eines Verbleibs von etwa einem Gramm Boil-Off Wasserstoff in dem Tieftemperatur-Flüssiggasspeicher 2 eine Menge von ca. 3.5 Gramm an Wasserstoff entnommen werden, da in der in Fig. 1 dargestellten Ausführungsform lediglich eine Entnahme von Flüssigwasserstoff möglich ist. Das bedeutet, insgesamt, dass für das Halten eines gewissen Quantums an Boil-Off Wasserstoff im Tieftemperatur-Flüssiggasspeicher 2 daraus eine vergleichsweise hohe Menge an Flüssigwasserstoff entnommen werden muss und demzufolge eine vergleichbar hohe Menge an gasförmigem Wasserstoff im Druckspeicher 5 zwischengespeichert werden muss, sofern der entnommene Flüssigwasserstoff nicht von der Verbrennungskraftmaschine bezogen wird.

Qualitativ gilt der gleiche Zusammenhang auch für andere Gase resp. Brenngase, die eine sehr niedrige Siedetemperatur aufweisen, wie bspw. Erdgas.

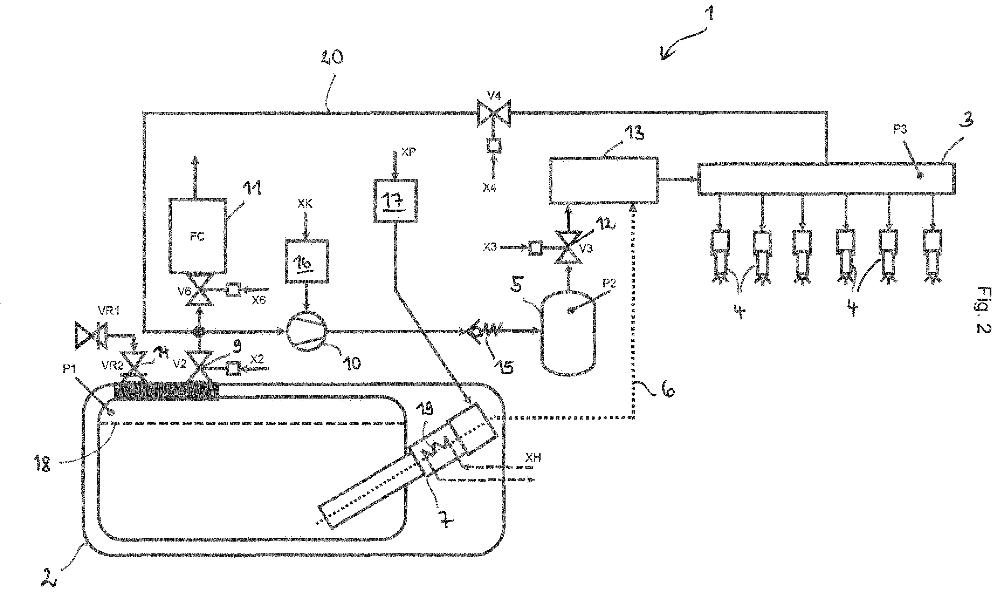

Fig. 2 zeigt eine bevorzugte Ausführungsform der Erfindung, in der auch ein Druckspeicher 5 enthalten ist, der jedoch hier über einen Kompressor 10 Boil-Off Gas aus dem Tieftemperatur-Flüssiggasspeicher 2 beziehen kann, sofern das Boil-Off Ventil 9 geöffnet ist.

Mit der in Fig. 2 dargelegten Ausführungsform ist das Ablassen von Boil-Off Gas aus dem Tieftemperatur-Flüssiggasspeicher 2 möglich, welches seiner bestimmungsgemäßen Verwendung, nämlich der Nutzung für eine Brenngas-Hochdruckeinspritzung in eine Verbrennungskraftmaschine, zugeführt werden kann, obwohl das in dem Tieftemperatur-Flüssiggasspeicher 2 vorhandene Boil-Off Gas ein hierfür viel zu geringes Druckniveau aufweist.

Über das Boil-Off Ventil 9 wird gasförmiger Kraftstoff aus dem Tieftemperatur-Flüssiggasspeicher 2 entnommen und einem Kompressor 10 zugeführt, der für ein Anheben des Druckniveaus sorgt. Die Hochdruckseite des Kompressors 10 ist mit dem Druckspeicher 5 verbunden, so dass darin eine Möglichkeit zur Zwischenspeicherung von gasförmigem Kraftstoff resp. Brenngas besteht, welches unter Voraussetzung eines ausreichend hohen Druckniveaus bei Bedarf dem Rail 3 zugeführt werden kann. Vorteil hierbei ist, dass - anders als bei der in Fig. 1 beschriebenen, nicht erfindungsgemäßen Ausführungsform - nun kein Flüssiggas mehr aus dem Tieftemperatur-Flüssiggasspeicher 2 entnommen wird, um darin eine zusätzliche Kapazität für das Halten von Boil-Off Gas zu erzielen, sondern diese zusätzliche Kapazität durch eine Entnahme von Boil-Off Gas geschaffen wird, welches über den Kompressor 10 dem Druckspeicher 5 zugeführt wird. Demzufolge muss bei der Erreichung der Druckfestigkeit des Flüssiggasspeicher 2 - anders als bei der in Fig. 1 beschriebenen Ausführungsform - zum weiteren Halten eines nachfolgend entstehenden Quantums an Boil-Off Gas nicht mehr eine vielfache Menge dieses Quantums aus Tieftemperatur-Flüssiggasspeicher 2 entnommen werden.

Das Boil-Off Ventil 9 befindet sich in einer bevorzugten Ausführungsform des Tieftemperatur-Flüssiggasspeichers 2 in einem Bereich, der bereits bei einer Betankung und unmittelbar danach frei von Flüssiggas ist. Insbesondere, wenn ein Einsatz in einem Onroad-Fahrzeug oder Offroad-Fahrzeug vorgesehen ist, kann dieser Bereich als eine nach vom Tankinneren weggeführte Ausbeulung des Tieftemperatur-Flüssiggasspeichers 2 ausgeführt sein, die ausreichend hoch ist, damit auch bei Kurvenfahrten und/oder Schräglagen kein Flüssiggas zu der Entnahmestelle in Form des Boil-Off Ventils 9 gelangt. Bevorzugt handelt es sich bei dem Boil-Off Ventil 9 um ein elektrisch ansteuerbares zweistufiges Ventil, das lediglich eine Strömung vom Tieftemperatur-Flüssiggasspeichers 2 hinaus ermöglicht und in der Gegenrichtung sperrt.

Besonders bevorzugt öffnet sich das Boil-Off Ventil 9 selbsttätig sobald der Innendruck im Tieftemperatur-Flüssiggasspeicher 2 einen bestimmten Druck-Schwellenwert überschreitet und bleibt solange geöffnet bis ein zweiter bestimmter Druck-Schwellenwert unterschritten wird. Alternativ oder zusätzlich kann die Druckbegrenzung auch in einem zum Boil-Off Ventil 9 parallel geschalteten Überdruckventil erfolgen.

In einer nicht erfindungsgemäßen Variante der Ausführungsform weist die oberhalb des Boil-Off Ventils 9 angeordnete Verzweigung, die sich in einer Schaltbilddarstellung als Knoten zeigt und nicht wie in der Fig. 2 als Vierpunktknoten darstellt, sondern lediglich das Aufeinandertreffen von drei Leitungen auf. Der Gaszufluss zu der Verzweigung, kann ausschließlich über das geöffnete Boil-Off Ventil 9 erfolgen. Von dieser Verzweigung bestehen Fluidverbindungen zu der Unterdruckseite eines Kompressors 10 und zu dem Eingang eines Ventils V6, das in einer Minimalausführung eine passive Druckbegrenzungsfunktion erfüllt. Die Figur 2 zeigt ferner eine Fluidrückleitung 20 - d.h. eine Verzweigung von vier Leitungen bzw. aus der Sicht eines Schaltbildes ein Vierpunktknoten, die das Rail 3 mit der Saugseite des Kompressors 10 verbindet.

Sofern aus dem Tieftemperatur-Flüssiggasspeicher 2 Boil-Off Gas über das Boil-Off Ventil 9 abgelassen wird, und der Kompressor 10 nicht für eine Verdichtung zur Weiterleitung in den Druckspeicher 5 sorgt, öffnet sich das Überdruckventil V6. In diesem Fall erfolgt eine Nutzung des Boil-Off-Gases mittels der Brennstoffzelle 11.

In einer nicht erfindungsgemäßen Variante ist es nicht erforderlich, dass die eingezeichnete Brennstoffzelle 11 vorhanden ist. Rein technisch wäre selbstverständlich auch ein direktes Ablassen von Boil-Off Gas an die Umwelt möglich. Vor dem Hintergrund einer besseren Umweltverträglichkeit und dem Sicherheitsaspekt kann das Weiterleiten von dem zwangsweise abzuleitenden Boil-Off Gas durch einen Katalysator vorgesehen sein, was bei entsprechender Auslegung zu einem Verbrennen des Boil-Off Gases ohne Entwicklung einer Flamme führt. In Bezug auf das Schaltbild wäre ein solcher Katalysator genauso angeordnet wie die Brennstoffzelle 11.

Dabei kann das Boil-Off Ventil 9 auch ferngesteuert (via Steuersignal X2) bereits bei einem Druck des Boil-Off Gases geöffnet werden, der sich unterhalb des Druck-Schwellenwerts befindet, bei dem eine automatische Öffnung erfolgt. Es kann demnach vorgesehen sein, den Kompressor 10 zu betrieben, um aus dem Tieftemperatur-Flüssiggasspeicher 2 Boil-Off Gas zu entnehmen und entsprechend zu verdichten, wodurch es dem Druckspeicher 5 zugeführt wird. Ein vorzeitiges Entnehmen von Boil-Off Gas aus dem Tieftemperatur-Flüssiggasspeicher 2, d.h. ein Ablassen von Boil-Off Gas unterhalb seiner zulässigen Druckfestigkeit, um dieses lediglich eine Zwischenspeicherung im Druckspeicher 5 zu erwirken, ist jedoch - ausgenommen von bestimmten Ausnahmen (s.u.) - von Nachteil, weil dies zu einer schnelleren Erwärmung der Innentemperatur des Tieftemperatur-Flüssiggasspeicher 2 führt (s.u.).

Eine solche Ausnahme kann dann bestehen, wenn beim Tankvorgang von dem im Tieftemperatur-Flüssiggasspeicher 2 verbliebenen Boil-Off Gas zumindest ein Teil davon mittels des Kompressors 10 dem Druckspeicher 5 zugeführt wird und ein ggf. verbleibender Anteil, der nicht mehr dem Druckspeicher 5 zugeführt werden kann/soll von der Betankungsvorrichtung abgesaugt wird, damit die gesamte Kapazität des Tieftemperatur-Flüssiggasspeichers 2 für das Nachtanken von Flüssiggas genutzt werden kann. Sofern es klar ist, dass unmittelbar nach dem Tankvorgang ein grösserer Verbrauch von Brenngas vorliegen wird, bietet eine solche Vorgehensweise den Vorteil, dass die von der Betankungsvorrichtung abzusaugende Brenngasmenge kleiner ist und damit zumindest ein Teil des Boil-Off Gases in dem erfindungsgemässen System verbleiben kann und dabei dem eigentlich vorgesehenen Nutzungspfad zugeführt werden kann.

Da die Brennstoffzelle 11 zur Versorgung von elektrifizierten Nebenverbrauchern dienen kann, kann das Ablassen von Boil-Off Gas auch dann sinnvoll sein, wenn sich der Innendruck des Tieftemperatur-Flüssiggasspeicher 2 unterhalb oder gar weit unterhalb seiner zulässigen Druckfestigkeit befindet, insbesondere dann, wenn elektrische Leitung benötigt wird.

Das Abführen von Boil-Off Gas aus dem Tieftemperatur-Flüssiggasspeicher 2 zur dortigen Druckentlastung in den Druckspeicher 5 hinein kann über einen gepulsten oder auch kontinuierlichen Betrieb des Kompressors 10 erfolgen, welcher bei gepulstem Betrieb in einer einfachen Ausführung entlang einer Zweipunkt-Druckkennlinie angesteuert werden kann. Das bedeutet, dass bei der Erreichung eines oberen Innendruck-Schwellenwertes im Tieftemperatur-Flüssiggasspeicher 2 ein gewisser Anteil des sich darin befindenden Boil-Off Gases dem Druckspeicher 5 zugeführt wird, bis ein festgelegtes Abschaltkriterium erfüllt ist, wodurch das Schließen des Boil-Off Ventils 9 sowie eine Abschaltung des Kompressors 10 ausgelöst werden. Das Abschaltkriterium kann abhängig vom Innendruck des Tieftemperatur-Flüssiggasspeichers 2 sein. Bevorzugt ist das Abschaltkriterium abhängig vom Innendruck P2 im Druckspeicher 5. Ferner kann das Abschaltkriterium von einem bestimmten Mindestdruck im Tieftemperatur-Flüssiggasspeicher 2 abhängig sein.

Diese Ausführungsform ermöglicht verschiedene Wege zur Brenngasversorgung einer Verbrennungskraftmaschine, nämlich eine Gasentnahme aus dem Druckspeicher 5 ohne eine sofortige Nachbefüllung mit Boil-Off Gas aus dem Tieftemperatur-Flüssiggasspeicher 2, eine Gasentnahme aus dem Druckspeicher 5 mit einer sofortigen Nachbefüllung mit Boil-Off Gas aus dem Tieftemperatur-Flüssiggasspeicher 2 und eine Entnahme von Flüssiggas über die Kryopumpe 7 und die weitere Fluidleitung 6.

Zur Minimierung des Gasanteils, der nicht dem eigentlich vorgesehenen Verwendungszweck - im Anwendungsbeispiel der Hochdruckeinspritzung für eine Verbrennungskraftmaschine - zugeführt werden kann, entspricht die bevorzugte Betriebsstrategie der bereits niedergeschriebenen Reihenfolge dieser drei Möglichkeiten.

Solange der Raildruck P3 mit Boil-Off Gas, welches sich bereits im Druckspeicher 5 befindet, abgedeckt werden kann, soll zunächst dieser sich bereits im Druckspeicher 5 befindende und nutzbare Vorrat an Brenngas entnommen werden. Dabei soll eine Entnahme von Boil-Off Gas aus dem Tieftemperatur-Flüssiggasspeicher 2 erst dann vorgenommen werden, wenn der Druck P2 im Druckspeicher 5 einen Schwellenwert aufweist der knapp oberhalb des Druckniveaus liegt, welches zu Abdeckung des Soll-Raildrucks 3 notwendig ist.

Diese Betriebsstrategie ist sinnvoll, da die (volumetrische) Energiedichte des Boil-Off Gases - unabhängig davon, ob sich dieses im Druckspeicher 5 oder im Tieftemperatur-Flüssiggasspeicher 2 befindet - deutlich geringer als die des sich im Tieftemperatur-Flüssiggasspeicher 2 befindenden Flüssiggases und daher durch eine Nutzung des Boil-Off Gases anstelle einer Verwendung von Flüssiggas einen grösseren Kapazitätszuwachs zur Aufnahme von nachfolgend entstehendem Boil-Off Gas erwirkt. Hinzu kommt, dass auch das im Tieftemperatur-Flüssiggasspeicher 2 verbliebene Boil-Off Gas für den unvermeidbaren Wärmeeintrag eine Wärmesenke darstellt und damit zu einer Verlangsamung des unerwünschten Temperaturanstiegs im Inneren des Tieftemperatur-Flüssiggasspeicher 2 beiträgt.

Damit Boil-Off Gas auch bei abgeschalteter Verbrennungskraftmaschine aus dem Tieftemperatur-Flüssiggasspeicher 2 entnommen und dem Druckspeicher 5 zugeführt werden kann, ist bevorzugterweise ein Kompressorantrieb 16 vorgesehen, der auch als Standverbraucher arbeiten kann. Es bietet sich insbesondere ein elektrischer Kompressorantrieb 16 an, der seine elektrische Eingangsleistung von der Brennstoffzelle 11 beziehen kann.

Bevorzugt erfolgt erst dann eine Entnahme von Brenngas in Flüssigform über die Kryopumpe 7 zur Versorgung des Rails 3, wenn der geforderte Raildruck P3 momentan nicht mehr unter Nutzung von Boil-Off Gas möglich ist oder eine Mindestmenge an Boil-Off Gas, die im Tieftemperatur-Flüssiggasspeicher 2 verbleiben soll, durch eine weitere Entnahme unterschritten werden würde (s.u.). Dies ist von Vorteil, da das Flüssiggas eine Dichte aufweist, die höher ist als die Dichte des unter hohem Druck im Druckspeicher 5 gehaltenen Boil-Off Gases und nochmals höher als die Dichte des im Tieftemperatur-Flüssiggasspeicher 2 gehaltenen Boil-Off Gases. Würde man anstelle einer möglichen Nutzung von Boil-Off Gas bereits Brenngas in Flüssigform beziehen, besteht ein erhöhtes Risiko, dass während einer späteren länger andauernden Nichtbenutzung der Verbrennungskraftmaschine die Gesamtkapazität zur Speicherung des Boil-Off Gases erschöpft ist, d.h. dem Druckspeicher 5 kein weiteres Boil-Off Gas mehr zugeführt werden kann und der Tieftemperatur-Flüssiggasspeicher 2 kein weiteres Boil-Off Gas mehr halten kann.

Das Abführen von Boil-Off Gas aus dem Tieftemperatur-Flüssiggasspeicher 2 in den Druckspeicher 5 erfolgt bevorzugt jeweils unter der Vorgabe, dass lediglich ein geringes Druckfenster oder eine geringe Menge für neu hinzukommendes Boil-Off Gas, welches noch im Tieftemperatur-Flüssiggasspeicher 2 gehalten werden kann, vorliegt und zwar unabhängig davon, ob ein gepulster oder kontinuierlicher Kompressor-Betrieb erfolgt.

Erstens lässt sich hierdurch die aufzuwendende Kompressionsenergie etwas reduzieren, weil im Kollektiv eine geringere Druckerhöhung zu leisten ist, um das entnommene Boil-Off Gas entsprechend stark zu verdichten, damit es dem Druckspeicher 5 zugeführt werden kann. Zweitens reduzieren sich die Anforderungen an den Kompressor, wenn dieser lediglich dafür geeignet sein muss, eine Verdichtung von bspw. 8 bar auf bspw. 400 bar erzielen zu können als eine Anhebung von bspw. 2 bar auf 400 bar. Letzteres betrifft die Leistungsfähigkeit und vor allem die thermodynamischen Anforderungen. Drittens stellt im Tieftemperatur-Flüssiggasspeicher 2 auch das darin verbliebene Boil-Off Gas eine Wärmesenke dar und trägt dazu bei, dass sich der Wärmeeintrag in den Tieftemperatur-Flüssiggasspeicher 2 auf eine insgesamt größere Menge des darin gespeicherten Brenngases z.B. Wasserstoff verteilt, wodurch sich der Anstieg der Innentemperatur verlangsamt.

Der Kompressor 10 kann bspw. durch einen Kompressorantrieb 16 in Form eines Elektro- oder Hydraulikmotors angetrieben werden. Bevorzugt ist für den Kompressor 10 ein solcher Kompressorantrieb 16 vorgesehen, der auch unabhängig von einem Betrieb einer mit dem Brenngas versorgten Verbrennungskraftmaschine arbeiten kann. Bevorzugt wird diese Einheit aus dem Kompressor 10 und dem Kompressorantrieb 16 bestehende Einheit in einem einzigen Arbeitspunkt, bei dem ein besonders hoher Systemwirkungsgrad vorliegt, bspw. im Pulsbetrieb betrieben. Bei Vorliegen eines gepulsten Betriebes sind die jeweiligen während einer Einschaltphase geförderten Gasmengen vorzugsweise vergleichsweise gering.

Optional kann für die Zuführung des Boil-Off Gases zu dem Druckspeicher 5 eine mehrstufige Verdichtung vorgesehen sein.

Die Gasentnahme aus dem Tieftemperatur-Flüssiggasspeicher 2 erfolgt in beiden Ausführungsformen der Erfindung auf dieselbe Art und Weise; entweder über das Ansaugen von Flüssiggas über eine Pumpe, die bevorzugt als Kryopumpe 7 ausgeführt ist oder über das Boil-Off Ventil 9. In Bezug auf die Gasentnahme und der Zugrundlegung der folgenden hier festgelegten Schnittstellen, nämlich (i) dem Ausgang des Tieftemperatur-Flüssiggasspeichers 2 sowie (ii) dem Ausgang der Kryopumpe 7 gelten für sämtliche Ausführungsformen die gleichen Überlegungen, Optionen und Präferenzen. Anzumerken ist, dass bei der zweiten Ausführungsform eine Kryopumpe 7 bzw. eine Kryopumpe 7 mit einer nachgeschalteten Verdichtung ausreichend ist, welche die Abdeckung des Raildrucks P3 erbringen kann, wohingegen in der ersten Ausführungsform ein nochmals höheres Druckniveau von Vorteil ist, um eine nutzbare Gasmenge in den Druckspeicher 5 fördern zu können.

Ferner ist eine in der Fig. 2 eingezeichnete Fluidrückleitung 20 vorgesehen, die eine Verbindung ausgehend von dem Rail 3 über ein Ventil V4 zu dem besagten Knotenpunkt auf der Saugseite des Kompressors 10, oberhalb des Boil-Off Ventils 9, führt. Bei dem Ventil V4 handelt es sich um ein Ventil, welches bevorzugt nur die beiden Schaltzustände "offen" und "geschlossen" aufweist. Das Ventil V4 kann ferngesteuert über das Steuersignal X4 betätigt werden. Dies ist bspw. dann vorgesehen, wenn unter hohem Druck stehendes Brenngas aus dem Rail 3 abgefördert werden soll, bspw., wenn eine mit der Injektorvorrichtung 4 in Wirkverbindung stehende Verbrennungskraftmaschine abgeschaltet werden soll. Gemäß dem Stand der Technik darf bspw. eine mit Wasserstoff betriebene Verbrennungskraftmaschine nach dem Abschaltewunsch erst dann tatsächlich abgeschaltet werden, wenn sich die im Rail 3 befindliche Wasserstoffmenge soweit reduziert hat, dass sich der Raildruck P3 dem atmosphärischen Druck angeglichen hat. Mit dem Vorsehen der Fluidrückleitung 20 ist ein sofortiges Abschalten der Verbrennungskraftmaschine möglich, weil das Brenngas resp. der Wasserstoff über das dann geöffnete Ventil V4 und den Kompressor 10 in den Druckspeicher 5 gefördert werden kann, wo es für eine spätere Verwertung gespeichert werden kann. Durch das Vorhandensein der Brennstoffzelle 11 kann das sich im Rail befindende Brenngas über die Fluidrückleitung 20 von ihr verwertet werden. Lediglich dann, wenn (i) die Brennstoffzelle 11 nicht vorhanden ist und (ii) dem Druckspeichers 5 kein Brenngas mehr zugeführt werden kann, was allerdings nicht unter die vorliegende Erfindung fällt und unter der bevorzugten Betriebsstrategie nicht eintritt, ist ein sofortiges Abschalten der Verbrennungskraftmaschine unvorteilhaft, aber dennoch unter Wahrung des Sicherheitsaspektes möglich. Alternativ zu einer Fortführung des Betriebs der Verbrennungskraftmaschine nach einem Abschaltewunsch bis sich der Vorrat an Brenngas im Rail 3 erschöpft hat, kann das im Rail 3 verbliebene Brenngas über die Fluidrückleitung 20 der Entsorgungseinrichtung zugeführt werden.

Gegenüber der Vorrichtung gemäß Figur 1 bietet die bevorzugte Ausführungsform der Erfindung gemäß Figur 2 eine Reihe an Vorteilen, die nachfolgend dargelegt sind. In Bezug auf die beabsichtigte Kapazitätserhöhung für das Halten von Boil-Off Gas wird aus dem Tieftemperatur-Flüssiggasspeicher 2 nur Boil-Off Gas entnommen, welches im Vergleich zum Flüssiggas eine bereits deutlich reduzierte Dichte aufweist. Demzufolge kann die durch die Erweiterung bereitgestellte Kapazität für die Zwischenspeicherung von Brenngas deutlich besser ausgenutzt werden.

Weiter ist an der bevorzugten Ausführungsform von Vorteil, dass ein hoher Anteil des Boil-Off Gases mit einer On-Board Aufbereitung, d.h. der Verdichtung über einen Kompressor 10 dem vorgesehenen Nutzungspfad zugeführt werden kann, wohingegen in der nicht erfindungsgemäßen Vorrichtung gemäß Figur 1 lediglich ein erhöhter Anteil an Boil-Off Gas in dem Tieftemperatur-Flüssiggasspeicher 2 gehalten werden kann, der bei der nachfolgenden Betankung abgesaugt und einer anschließenden Verflüssigung erneut als Flüssiggas bereitgestellt werden kann.

Zudem kann durch das Vorsehen der Fluidrückleitung 20 eine Rückgewinnung des Brenngases erzielt werden, sodass bei einem plötzlichen Förderstopp von Brenngas in das Rail 3, dieses nicht mehr ohne energetische Verwertung abgeführt werden muss.

Anders als die im Zusammenhang mit Fig. 2 erläuterte Ausführungsform der vorliegenden Erfindung benötigt die in Fig. 1 dargestellte, nicht erfindungsgemäße Vorrichtung hingegen keinen Kompressor 10 sowie den dafür erforderlichen Antrieb. Insbesondere bei kommerziell eingesetzten Fahrzeugen bzw. mobilen Arbeitsmaschinen sind längere Standzeiten vergleichsweise selten, sodass eine etwaige Nutzung des Kompressors weit weniger extensiv ausfallen wird (wenn überhaupt) und die vereinfachte Struktur ohne den Kompressor von Vorteil ist.

### Bezugszeichenliste:

- 1: System
- 2: Tieftemperatur-Flüssiggasspeicher
- 3: Rail
- 4: Injektorvorrichtung
- 5: Druckspeicher
- 6: weitere Fluidleitung
- 7: Kryopumpe
- 8: Ventil zum Verbinden von Druckspeicher oder dessen Bypassleitung
- 9: Boil-Off Ventil
- 10: Kompressor
- 11: Brennstoffzelle
- 12: Druckspeicher-Auslassventil
- 13: Gasdruck-Stelleinheit
- 14: Zulaufventil
- 15: Rückschlagventil
- 16: Kompressorantrieb
- 17: Pumpenantrieb
- 18: Pegel des Flüssiggases
- 19: Heizeinrichtung der Kryopumpe
- 20: Fluidrückleitung

## Patentansprüche

1. System (1) zum Bereitstellen eines gasförmigen Kraftstoffs, insbesondere ein Kraftstoffeinspritzsystem, umfassend:
einen Tieftemperaturtank, der vorzugsweise als Tieftemperatur-Flüssiggasspeicher (2) ausgeführt ist, zum Aufnehmen des Kraftstoffs in seinem durch Abkühlen erreichten flüssigen Aggregatszustand,
ein mit dem Tieftemperaturtank in Fluidverbindung stehendes Boil-Off Ventil (9) zum Ablassen von gasförmigem Kraftstoff aus dem Tieftemperaturtank (2),
ein Rail (3), das mit mindestens einer Injektorvorrichtung (4) zum Abgeben von gasförmigem Kraftstoff in einen Brennraum fluidisch verbunden ist, und
einen zum Aufnehmen von gasförmigem Kraftstoff ausgebildeten Druckspeicher (5), der sowohl mit dem Tieftemperaturtank als auch dem Rail (3) fluidisch verbindbar ist, um aus dem Tieftemperaturtank stammenden, über das Boil-Off Ventil (9) abgelassenen, gasförmigen Kraftstoff zwischenzuspeichern und diesen dem Rail (3) zuzuführen,
**gekennzeichnet durch**
eine stromabwärts des Boil-Off Ventils (9) angeordnete Brennstoffzelle (11), um den gasförmigen Kraftstoff in elektrische Energie zu wandeln, wobei
das Rail (3) mit der Brennstoffzelle (11) fluidisch verbindbar ist, um im Rail (3) nicht benötigten gasförmigen Kraftstoff der Brennstoffzelle (11) zuzuführen.

2. System (1) nach Anspruch 1, ferner umfassend eine weitere Fluidleitung (6), die unter Umgehung des Druckspeichers (5) den Tieftemperaturtank und das Rail (3) fluidisch miteinander verbindet, um gasförmigen Kraftstoff an das Rail (3) zu leiten.

3. System (1) nach Anspruch 2, wobei die weitere Fluidleitung (6) mit einer Pumpe, insbesondere einer Kryopumpe (7) verbunden ist, die dazu ausgelegt ist, den in seinem flüssigen Aggregatszustand befindlichen Kraftstoff aus dem Tieftemperaturtank zu fördern und vorzugsweise diesen dabei in seinen gasförmigen Aggregatszustand übergehen zu lassen.

4. System (1) nach Anspruch 3, wobei die Pumpe, deren Pumpwerk zur Förderung des sich in seinem flüssigen Aggregatszustand befindenden Kraftstoffes aus dem Tieftemperaturtank dienen kann, bevorzugt darin integriert ist und alternativ oder ergänzend die Überführung des Kraftstoffes in seinen gasförmigen Aggregatszustand innerhalb dieser Pumpe erfolgt.

5. System (1) nach Anspruch 4, wobei der Pumpenantrieb (17) der Pumpe, die zur Förderung des sich in seinem flüssigen Aggregatszustand befindenden Kraftstoffes aus dem Tieftemperaturtank dienen kann, ausserhalb der Pumpe installiert ist und bevorzugt ausserhalb des Tieftemperaturtanks installiert ist.

6. System (1) nach einem der Anspruch 2 bis 5, ferner mit einem Ventil (8), das dazu ausgelegt ist, von dem Tieftemperaturtank stammenden gasförmigen Kraftstoff an den Druckspeicher (5) oder mittels der weiteren Fluidleitung (6) unter Umgehung des Druckspeichers (5) an das Rail (3) zu leiten.

7. System (1) nach einem der vorhergehenden Ansprüche, wobei stromabwärts des Boil-Off Ventils (9) ein Kompressor (10) angeordnet ist, um den Druck des über das Boil-Off Ventil (9) abgelassenen gasförmigen Kraftstoffs zu erhöhen, wobei vorzugsweise die Oberdruckseite des Kompressors (10) mit dem Druckspeicher (5) fluidisch verbunden ist, um den in seinem Druck erhöhten gasförmigen Kraftstoff dem Druckspeicher (5) zuzuführen.

8. System (1) nach einem der vorhergehenden Ansprüche, wobei eine Batterie zum Zwischenspeichern der durch die Brennstoffzelle erzeugten elektrischen Energie vorgesehen ist.

9. System (1) nach einem der vorhergehenden Ansprüche 7, wobei das Rail (3) mit einer Saugseite des Kompressors (10) fluidisch verbindbar ist, um im Rail (3) nicht benötigten gasförmigen Kraftstoff dem Druckspeicher (5) zuzuführen.

10. System (1) nach einem der vorhergehenden Ansprüche, ferner umfassend ein Druckspeicherauslassventil (12) zum wahlweisen Ablassen von in dem Druckspeicher (5) befindlichen gasförmigen Kraftstoff an das Rail (3).

11. System (1) nach einem der vorhergehenden Ansprüche, ferner umfassend eine stromaufwärts des Rails (3) angeordnete Gasdruck-Stelleinheit (13) zum Einstellen des Druckniveaus von aus dem Tieftemperaturtankstammenden und in den gasförmigen Aggregatszustand übergegangenen Kraftstoff, der in das Rail (3) einströmt, wobei vorzugsweise die Gasdruck-Stelleinheit (13) jeweils separat mit dem Druckspeicher (5) und dem Tieftemperaturtank verbunden ist.

12. System (1) nach einem der vorhergehenden Ansprüche, ferner umfassend ein mit dem Tieftemperaturtank in Fluidverbindung stehendes Zulaufventil (14) zum Einbringen von Kraftstoff in den Tieftemperaturtank (2).

13. System (1) nach einem der vorhergehenden Ansprüche, wobei der Tieftemperaturtank (2) mehrwandig ausgestaltet ist, um einen Tankinhalt thermisch zu isolieren.

14. System (1) nach einem der vorhergehenden Ansprüche, wobei der Tieftemperaturtank dazu ausgelegt ist, einen Innendruck von mindestens 6 bar, vorzugsweise von mindestens als 8 bar, jedoch nur einen maximalen Tankinnendruck von bis zu 16 bar, vorzugsweise bis zu 12 bar, bevorzugterweise bis zu 10 bar widerstehen zu können.

15. Fahrzeug, insbesondere Arbeitsmaschine mit einem Kraftstoffeinspritzsystem nach einem der vorhergehenden Ansprüche.

## Claims

1. System (1) for providing a gaseous fuel, in particular a fuel injection system, comprising:
a low temperature tank that is preferably configured as a low temperature liquid gas tank (2) for receiving fuel in its liquid aggregate state achieved by cooling; and
a boil-off valve (9) in fluid communication with the low temperature tank for discharging gaseous fuel from the low temperature tank (2),
a rail (3) that is fluidically connected to at least one injector device (4) for discharging gaseous fuel into a fuel space, and
a pressure accumulator (5) that is configured to receive gaseous fuel and that is fluidically connectable to both the low temperature tank and the rail (3) to buffer fuel coming from the low temperature tank and discharged via the boil-off valve and to supply it to the rail (3),
**characterized by**
a fuel cell (11) arranged downstream of the boil-off valve (9) to convert the gaseous fuel into electrical energy, wherein
the rail (3) is fluidically connectable to the fuel cell (11) to supply gaseous fuel not required in the rail (3) to the fuel cell (5).

2. System (1) in accordance with claim 1, further comprising a further fluid line (6) that fluidically connects the low temperature tank and the rail (3) to one another while bypassing the pressure accumulator (5) to lead gaseous fuel to the rail (3).

3. System (1) in accordance with claim 2, wherein the further fluid line (6) is connected to a pump, in particular to a cryopump (7), that is configured to convey the fuel in its liquid aggregate state from the low temperature tank and preferably to allow it to change into its gaseous aggregate state in so doing.

4. System (1) in accordance with claim 3, wherein the pump whose pump mechanism can serve the conveying of the fuel in its liquid aggregate state from the low temperature tank is preferably integrated therein and, alternatively or in addition the transposition of the fuel into its gaseous aggregate state takes place within this pump.

5. System (1) in accordance with claim 4, wherein the pump drive (17) of the pump that can serve the conveying of the fuel in its liquid aggregate state from the low temperature tank is installed outside the pump and is preferably installed outside the low temperature tank.

6. System (1) in accordance with one of the claims 2 to 5, further having a valve (8) that is configured to lead gaseous fuel coming from the low temperature tank to the pressure accumulator (5) or to lead it to the rail (3) by means of the further fluid line (6) while bypassing the pressure accumulator (5).

7. System (1) in accordance with one of the preceding claims, wherein a compressor (10) is arranged downstream of the boil-off valve (9) to increase the pressure of the gaseous fuel discharged via the boil-off valve (9), with the upper pressure side of the compressor (10) being fluidically connected to the pressure accumulator (5) to supply the gaseous fuel increased in pressure to the pressure accumulator (5).

8. System (1) in accordance with one of the preceding claims, wherein a battery is provided to buffer the electrical energy generated in this process.

9. System (1) in accordance with claim 7, wherein the rail (3) is fluidically connectable to a suction side of the compressor (10) to supply gaseous fuel not required in the rail (3) to the pressure accumulator (5).

10. System (1) in accordance with one of the preceding claims, further comprising a pressure accumulator discharge valve (12) for the selective discharge of gaseous fuel in the pressure accumulator (5) to the rail (3).

11. System (1) in accordance with one of the preceding claims, further comprising a gas adjustment unit (13) arranged upstream of the rail (3) to set the pressure level of fuel coming from the low temperature tank and transitioned into the gaseous aggregate state that flows into the rail (3), with the gas pressure adjustment unit (13) being respectively separately connected to the pressure accumulator (5) and the low temperature tank.

12. System (1) in accordance with one of the preceding claims, further comprising an inflow valve (14) in fluid communication with the low temperature tank for introducing gaseous fuel into the low temperature tank (2).

13. System (1) in accordance with one of the preceding claims, wherein the low temperature tank (2) is configured with multiple walls to thermally insulate a tank content.

14. System (1) in accordance with one of the preceding claims, wherein the low temperature tank is configured to be able to withstand an inner pressure of at least 6 bar, preferably of at least as 8 bar, but only to be able to withstand a maximum inner tank pressure of up to 16 bar, preferably up to 12 bar, more preferably up to 10 bar.

15. Vehicle, in particular a work machine, having a fuel injection system in accordance with one of the preceding claims.

## Revendications

1. Système (1) pour fournir un carburant gazeux, notamment système d'injection de carburant, comprenant :
un réservoir cryogénique, qui est de préférence conçu sous forme de réservoir de gaz liquide cryogénique (2), pour recevoir le carburant dans son état d'agrégation liquide atteint par refroidissement,
une soupape d'ébullition (9) en liaison fluidique avec le réservoir cryogénique pour évacuer le carburant gazeux du réservoir cryogénique (2),
une rampe (3), qui est reliée fluidiquement à au moins un dispositif d'injection (4) pour délivrer du carburant gazeux dans une chambre de combustion, et
un accumulateur de pression (5) réalisé pour recevoir du carburant gazeux, qui peut être relié fluidiquement aussi bien au réservoir cryogénique qu'à la rampe (3), afin de stocker temporairement du carburant gazeux provenant du réservoir cryogénique, évacué par la soupape d'ébullition (9), et de l'amener à la rampe (3),
**caractérisé par**
une pile à combustible (11) agencée en aval de la soupape d'ébullition (9), pour convertir le carburant gazeux en énergie électrique,
la rampe (3) pouvant être reliée fluidiquement à la pile à combustible (11) pour amener à la pile à combustible (11) le carburant gazeux non utilisé dans la rampe (3).

2. Système (1) selon la revendication 1, comprenant en outre une autre conduite de fluide (6) qui, en contournant l'accumulateur de pression (5), relie fluidiquement le réservoir cryogénique et la rampe (3) entre eux afin d'acheminer du carburant gazeux vers la rampe (3).

3. Système (1) selon la revendication 2, dans lequel l'autre conduite de fluide (6) est reliée à une pompe, notamment une cryopompe (7), qui est adaptée pour transporter le carburant se trouvant dans son état d'agrégation liquide hors du réservoir cryogénique et, de préférence, pour le faire passer dans son état d'agrégation gazeux.

4. Système (1) selon la revendication 3, dans lequel la pompe dont le mécanisme de pompage peut servir à transporter le carburant se trouvant dans son état d'agrégation liquide hors du réservoir cryogénique est de préférence intégrée dans celui-ci et, en variante ou en complément, le passage du carburant à son état d'agrégation gazeux est effectué à l'intérieur de cette pompe.

5. Système (1) selon la revendication 4, dans lequel l'entraînement de pompage (17) de la pompe qui peut servir à transférer le carburant se trouvant dans son état d'agrégation liquide hors du réservoir cryogénique est installé à l'extérieur de la pompe et est de préférence installé à l'extérieur du réservoir cryogénique.

6. Système (1) selon l'une quelconque des revendications 2 à 5, avec en outre une soupape (8) qui est adaptée pour acheminer le carburant gazeux provenant du réservoir cryogénique vers l'accumulateur de pression (5) ou vers la rampe (3) au moyen de l'autre conduite de fluide (6) en contournant l'accumulateur de pression (5).

7. Système (1) selon l'une quelconque des revendications précédentes, dans lequel un compresseur (10) est agencé en aval de la soupape d'ébullition (9) pour augmenter la pression du carburant gazeux évacué par la soupape d'ébullition (9), le côté haute pression du compresseur (10) étant de préférence relié fluidiquement à l'accumulateur de pression (5) pour amener le carburant gazeux dont la pression a augmenté à l'accumulateur de pression (5).

8. Système (1) selon l'une quelconque des revendications précédentes, dans lequel une batterie est prévue pour stocker temporairement l'énergie électrique générée par la pile à combustible.

9. Système (1) selon l'une quelconque des revendications 7 précédentes, dans lequel la rampe (3) peut être reliée fluidiquement à un côté aspiration du compresseur (10) afin d'amener le carburant gazeux non utilisé dans la rampe (3) à l'accumulateur de pression (5).

10. Système (1) selon l'une quelconque des revendications précédentes, comprenant en outre une soupape de sortie d'accumulateur de pression (12) pour évacuer sélectivement le carburant gazeux se trouvant dans l'accumulateur de pression (5) vers la rampe (3).

11. Système (1) selon l'une quelconque des revendications précédentes, comprenant en outre une unité de réglage de pression de gaz (13) agencée en amont de la rampe (3) pour régler le niveau de pression du carburant provenant du réservoir cryogénique et passé à l'état d'agrégation gazeux qui s'écoule dans la rampe (3), de préférence l'unité de réglage de pression de gaz (13) étant reliée séparément à l'accumulateur de pression (5) et au réservoir cryogénique, respectivement.

12. Système (1) selon l'une quelconque des revendications précédentes, comprenant en outre une soupape d'arrivée (14) en communication fluidique avec le réservoir cryogénique pour introduire du carburant dans le réservoir cryogénique (2).

13. Système (1) selon l'une quelconque des revendications précédentes, dans lequel le réservoir cryogénique (2) est conçu à plusieurs parois afin d'isoler thermiquement un contenu de réservoir.

14. Système (1) selon l'une quelconque des revendications précédentes, dans lequel le réservoir cryogénique est adapté pour pouvoir résister à une pression interne d'au moins 6 bars, de préférence d'au moins 8 bars, mais seulement à une pression interne maximale du réservoir allant jusqu'à 16 bars, de préférence jusqu'à 12 bars, de manière davantage préférée jusqu'à 10 bars.

15. Véhicule, notamment machine de travail, avec un système d'injection de carburant selon l'une quelconque des revendications précédentes.
